# EUROPÄISCHE PATENTANMELDUNG

(11) **EP 0 670 287 A1**
(43) Veröffentlichungstag der Anmeldung: **06.09.1995**
(21) Anmeldenummer: 95102389.4
(22) Anmeldetag: 21.02.1995
(51) Int. Cl.: C01G 19/02, C01B 13/20

(54) **Verfahren zur Herstellung von feinteiligen Zinndioxidpulvern**

(30) Priorität: 02.03.1994 DE 4406786
(71) Anmelder: BASF AKTIENGESELLSCHAFT, D-67056 Ludwigshafen (DE)
(72) Erfinder: Adel, Jörg, Dr., D-67071 Ludwigshafen (DE); Dyllick-Brenzinger, Rainer, Dr., D-69469 Weinheim (DE)

(57) **Zusammenfassung**

Herstellung von feinteiligen Zinndioxidpulvern durch Gasphasenzersetzung von flüchtigen Zinnverbindungen, indem man zinnorganische Verbindungen oxidativ zersetzt.

## Beschreibung

Die vorliegende Erfindung betrifft ein neues Verfahren zur Herstellung von feinteiligen Zinndioxidpulvern durch Gasphasenzersetzung von flüchtigen Zinnverbindungen.

Feinteiliges pulverförmiges Zinndioxid mit Teilchengrößen von etwa ≦ 1 µm ist für viele Anwendungszwecke von Interesse, z.B. als leitfähiges Pigment für Lacke und Kunststoffe, als Zuschlagstoff in Glasuren, Farben, Papier und Textilien sowie vor allem auch als Additiv für elektrostatische Toner, wo es zur Steuerung der elektrostatischen Aufladung des Toners (d.h., als charge controlling agent, CCA), zur Verbesserung seiner Fließfähigkeit und zur Verhinderung der sog. toner impaction, d.h. des Verklebens der Oberfläche der Carrierteilchen mit Tonerpartikeln, eingesetzt werden kann.

Aus der US-A-5 194 356 ist ein Verfahren zur Herstellung von feinteiligem Zinndioxid bekannt, bei dem gasförmiges Zinntetrachlorid in einer Flamme aus Wasserstoff, Sauerstoff und Stickstoff hydrolysiert wird. Hierbei entstehen in der Regel hydrophile Produkte, die insbesondere für elektrostatische Anwendungen zu wünschen übrig lassen. Außerdem entsteht im Abgas Salzsäure, die stark korrodierend wirkt und mühsam vom Reaktionsprodukt entfernt werden muß.

In der FR-A-2 606 395 wird ein Verfahren zur Herstellung von feinteiligen Metalloxiden durch Gasphasenoxidation geeigneter Ausgangsverbindungen bei hohen Temperaturen vorgeschlagen. Genauere Angaben werden jedoch nur zur Herstellung von Titandioxid, Eisenoxid und Zirkondioxid aus den Chloriden gemacht.

Der Erfindung lag die Aufgabe zugrunde, den genannten Mängeln abzuhelfen und die Herstellung von feinteiligem, hydrophobem Zinndioxidpulver auf vorteilhafte Weise zu ermöglichen.

Demgemäß wurde ein Verfahren zur Herstellung von feinteiligen Zinndioxidpulvern durch Gasphasenzersetzung von flüchtigen Zinnverbindungen gefunden, welches dadurch gekennzeichnet ist, daß man zinnorganische Verbindungen oxidativ ersetzt.

Hierfür sind insbesondere Verbindungen der Formel SnR₄ geeignet, in der die Reste R gleich oder verschieden sind und Alkyl, Alkenyl oder Aryl bedeuten, also z.B. Zinntetraalkyle, Zinntetraalkenyle und Zinntetraaryle sowie gemischte Zinnarylalkyle und Zinnalkylalkenyle.

Auf die Zahl der Kohlenstoffatome in den Alkyl-, Alkenyl- und Arylresten kommt es im Prinzip nicht an, bevorzugt sind jedoch solche Verbindungen, die bei Temperaturen bis zu etwa 250^{o}C einen ausreichend hohen Dampfdruck aufweisen, um eine einfache Verdampfung zu gewährleisten.

Dementsprechend sind bei Zinnorganylen mit 4 gleichen Resten R insbesondere C₁-C₆-, vor allem C₁-C₄-Alkylreste, C₂-C₆-Alkenyl-, vor allem Allylreste, und Phenylreste bevorzugt.

Schließlich können auch zwei- oder mehrkernige Zinnorganyle, die beispielsweise über Sauerstoffatome verbrückt sein können, eingesetzt werden.

Als Beispiele für geeignete zinnorganische Verbindungen seien Zinndiallyldibutyl, Zinntetraallyl, Zinntetraamyl, Zinntetran-propyl, Zinntetraethyl, Zinntetraphenyl, Bis(tri-n-butylzinn)oxid und vor allem Zinntetra-n-butyl und Zinntetramethyl genannt.

Als oxidierendes Gas werden insbesondere Luft oder andere Sauerstoff/Inertgas-Gemische eingesetzt, die Verwendung von Ozon oder Distickstoffmonoxid ist jedoch auch möglich.

Üblicherweise wird das erfindungsgemäße Verfahren bei 300 bis 1000^{o}C, bevorzugt bei 350 bis 800^{o}C und besonders bevorzugt bei 400 bis 700^{o}C durchgeführt.

Die Temperatur und auch die Sauerstoffmenge werden vorteilhaft so gewählt, daß die Oxidation der organischen Reste zu Kohlendioxid und Wasser möglichst vollständig ist. Wird nämlich weniger Sauerstoff eingeleitet als stöchiometrisch erforderlich ist, so wird in Abhängigkeit von der gewählten Temperatur entweder das Zinnorganyl nur teilweise zersetzt und kondensiert dann im Abgasbereich, oder es kommt zur Bildung von Ruß und anderen Zersetzungsprodukten.

Verfahrenstechnisch geht man bei dem erfindungsgemäßen Verfahren zweckmäßigerweise wie folgt vor:
Die Zinnorganyle werden aus einem bei einer Temperatur von 20^{o}C bis zum Siedepunkt des jeweiligen Zinnorganyls gehaltenen Verdampfergefäß mit Hilfe eines inerten Trägergases wie Stickstoff oder Argon über eine Düse in den beheizten Reaktor überführt. Das oxidierende Gas wird über eine getrennte Zuleitung zugeführt. Als Reaktoren eignen sich dabei feststehende oder bewegte Rohr- oder Kugelreaktoren.

Die entstandenen Zinndioxidteilchen werden mit dem Abgasstrom aus dem Reaktor ausgetragen und können in einem geeigneten Filter, z.B. großflächigen Glasfilterplatten oder Filtertüchern, die mit einem Gasstrom abzureinigen sind, oder in Zyklonen (vorzugsweise mehreren aufeinanderfolgenden) abgeschieden werden.

Es hat sich als vorteilhaft erweisen, den bei der Oxidation entstehenden Wasserdampf vor der Abscheidung des Zinndioxids aus dem Abgasstrom auszukondensieren. Geeignet sind hierfür beispielsweise wassergekühlte Metallschlangenkühler.

Bei einer bevorzugten Ausführungsform des erfindungsgemäßen Verfahrens wird das erhaltene feinteilige Zinndioxid noch einer thermischen Nachbehandlung unter Zufuhr eines Gasstroms unterzogen, bei der unerwünschte Nebenprodukte, wie nicht umgesetzte Zinnorganyle und Kohlenstoff, deren Anwesenheit nicht verhindert werden konnte, entfernt werden.

Als Gase eignen sich hierfür z.B. Inertgase wie Stickstoff und auch Luft oder andere Sauerstoff/Inertgas-Gemische.

Die Strömungsgeschwindigkeit des Gases wird vorzugsweise so gewählt, daß in 1 h ein 50 bis 200facher, insbesondere etwa 100facher Austausch des Gases im Reaktor erfolgt.

Die Nachbehandlung wird vorteilhaft bei 200 bis 700^{o}C, bevorzugt 400 bis 700^{o}C, durchgeführt und dauert in der Regel 0,5 bis 4 h.

Die mit Hilfe des erfindungsgemäßen Verfahrens hergestellten feinteiligen Zinndioxidpulver weisen mittlere Teilchengrößen von üblicherweise 10 bis 50 nm auf, wobei die Teilchengröße minimal etwa 1 nm und maximal etwa 100 nm betragen kann (bestimmt durch Transmissionselektronenmikroskopie). Diese Zahlenwerte gelten auch für thermisch bei ≦ 700^{o}C nachbehandeltes Zinndioxid, das überraschenderweise kein Teilchenwachstum zeigt. Der Zinngehalt der erfindungsgemäß hergestellten Zinndioxide liegt in der Regel bei >78 Gew.-% (bestimmt durch Atomabsorptionsspektroskopie) und entspricht damit dem theoretischen Wert von 78,76 Gew.-%.

Der Kohlenstoffgehalt des nicht nachbehandelten Produkts kann bis zu 0,5 Gew.-% betragen, bedingt durch anhaftende Nebenprodukte oder unzersetzte Ausgangsstoffe. Durch die thermische Nachbehandlung sinkt der Kohlenstoffgehalt auf <0,1 Gew.-%. Gleichzeitig ist eine Farbveränderung von meist hellgrau nach hellbeige bis weiß zu beobachten.

Die erfindungsgemäß hergestellten Zinndioxidpulver sind als Rohprodukt und als nachbehandeltes Produkt hydrophob und schwimmen in Wasser auf. Sie sind kristallin und zeigen im Röntgenpulverdiagramm das Beugungsmuster des tetragonalen Kassiterits.

Die mit Hilfe des erfindungsgemäßen Verfahrens hergestellten feinteiligen Zinndioxidpulver sind vielseitig verwendbar, z.B. als leitfähige Pigmente in Lacken und Kunststoffen und als Zuschlagstoffe in Glasuren, Farben, Papier und Textilien und eignen sich aufgrund ihrer Leitfähigkeit und ihres hydrophoben Charakters insbesondere auch als Additive für elektrostatische Toner (CCA, Fließfähigkeitsverbesserer).

### Beispiel

Als Reaktor diente ein 500 ml-Quarzglaskolben, der sich an einem Rotationsverdampferantrieb mit 30 U/min drehte und sich in einem auf 600^{o}C aufgeheizten, elektrischen Klappofen befand (Kolbeninnentemperatur: 560^{o}C).

100 ml (148 g) Zinntetrabutyl wurden mit einem Stickstoffstrom von 50 l/h aus einem auf 190^{o}C erhitzten Verdampfergefäß über eine ebenfalls auf 190^{o}C temperierte, metallische Leitung in 6h durch den Kolbenhals in den Kolben überführt. Über eine zweite Leitung wurden 100 l/h Luft zur Oxidation eingeleitet.

Der Abgasstrom wurde zur Kondensation des Reaktionswassers zunächst an einem wassergekühlten Metallschlangenkühler vorbeigeführt.

Der Hauptteil des im Abgasstrom befindlichen Zinndioxids sammelte sich in dem nachgeschalteten 3 l-Glasgefäß mit D3-Glasfilterplatte.

Das entstandene Rohprodukt war hellgrau und wurde anschließend in einen zweiten, analogen Reaktor überführt und 1h bei 650^{o}C bei einem Stickstoffstrom von 100 l/h getempert. Das abgekühlte nachbehandelte Produkt war blaß hellbeige gefärbt.

Es wurden 40,57 g pulverförmiges Zinndioxid mit einer mittleren Teilchengröße von 20 nm und einer spezifischen Oberfläche (BET) von 47 m²/g erhalten.

Bei einer Elementaranalyse wurden folgende Ergebnisse erhalten:

| | | |
|---|---|---|
| Rohprodukt: nachbehandeltes | 78,5 Gew.-% Zinn | 0,2 Gew.-% Kohlenstoff |
| Produkt: | 78,7 Gew.-% Zinn | <0,1 Gew.-% Kohlenstoff |

## Patentansprüche

1. Verfahren zur Herstellung von feinteiligen Zinndioxidpulvern durch Gasphasenzersetzung von flüchtigen Zinnverbindungen, dadurch gekennzeichnet, daß man zinnorganische Verbindungen oxidativ zersetzt.

2. Verfahren nach Anspruch 1, dadurch gekennzeichnet, daß man als zinnorganische Verbindungen Zinntetraalkyle, -alkenyle und/oder -aryle, bei denen jeder der vier organischen Reste bis zu 6 Kohlenstoffatome enthalten kann, verwendet.

3. Verfahren nach Anspruch 1 oder 2, dadurch gekennzeichnet, daß man als zinnorganische Verbindung Zinntetra-n-butyl verwendet.

4. Verfahren nach den Ansprüchen 1 bis 3, dadurch gekennzeichnet, daß man zur oxidativen Zersetzung ein sauerstoffhaltiges Gas verwendet.

5. Verfahren nach den Ansprüchen 1 bis 4, dadurch gekennzeichnet, daß man es bei 300 bis 1000^{o}C durchführt.

6. Verfahren nach den Ansprüchen 1 bis 5, dadurch gekennzeichnet, daß man das bei der oxidativen Zersetzung erhaltene Produkt einer thermischen Nachbehandlung bei 200 bis 700^{o}C unter Zufuhr eines Gasstroms unterzieht.

7. Verfahren nach Anspruch 6, dadurch gekennzeichnet, daß man einen Inertgas- oder Luftstrom verwendet.
